# EUROPÄISCHE PATENTSCHRIFT

(11) **EP 2 601 825 B1**
(45) Veröffentlichungstag und Bekanntmachung des Hinweises auf die Patenterteilung: **02.03.2016**
(21) Anmeldenummer: 12007979.3
(22) Anmeldetag: 28.11.2012
(51) Int. Cl.: A01D 33/10

(54) **Erntemaschine für Kartoffeln, Rüben o. dgl. Hackfrüchte**
Harvesting machine for potatoes, beets or similar root crops
Moissonneuse pour pommes de terre, betteraves ou plantes racines analogues

(30) Priorität: 07.12.2011 DE 102011120377
(43) Veröffentlichungstag der Anmeldung: 12.06.2013
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Deters, Frank

(56) Entgegenhaltungen:
- EP-A1- 1 405 554
- EP-A1- 1 591 001
- EP-A1- 2 090 149
- DE-A1- 3 900 573

## Beschreibung

Die Erfindung betrifft eine Erntemaschine für Kartoffeln, Rüben o. dgl. Hackfrüchte, wobei die Maschine in Form eines Bunkerroders gemäß dem Oberbegriff des Anspruchs 1 ausgebildet ist.

Zur Ernte von Hackfrüchten in Form von Kartoffeln, Rüben o. dgl. Produkten sind von Traktoren gezogene Kartoffelvollerntemaschinen oder selbst fahrende Erntemaschinen seit langem bekannt. Dabei werden sogenannte Überladeroder eingesetzt, bei denen die gerodeten und von Beimengungen getrennten Hackfrüchte mittels einer im wesentlichen quer zur Fahrtrichtung der Maschine ausgerichteten Fördereinrichtung auf ein mitfahrendes Sammelfahrzeug übergeben werden. Neben diesen direkt mit dem Rodevorgang verbundenen Überlade-Maschinen sind auch als Bunkerroder bezeichnete Erntemaschinen bekannt, bei denen das Erntegut im variabel ausführbaren Aufnahmeraum zumindest eines Bunkers gesammelt wird, so dass erst nach einer Rodephase mit Befüllung dieses Bunkers ein späterer Überladevorgang erforderlich ist. Derartige Maschinen mit dem Zwischenbunker sind in verschiedenen Ausführungen in den Markt eingeführt (Firmenprospekt "Produktprogramm", Nr. L01.1002.DE/12/10/2500, Grimme Landmaschinenfabrik GmbH & Co. KG, 49401 Damme, Deutschland). Eine gattungsbildende Ausführung derartiger selbstfahrender Erntemaschinen ist in EP 1 405 554 A1 gezeigt. Auch die Lösungen gemäß EP 2 090 149 A1 und EP 1 591 001 A1 zeigen selbstfahrende Maschinen mit in den Aufnahmeraum für das Erntegut eingreifenden Fördereinrichtungen einer komplexen Übergabebaugruppe.

Bei einer Bunker-Konstruktion gemäß DE 39 00 573 A1 werden die Hackfrüchte im Bereich einer als Gleitplatte wirkenden Seitenwand zu einem bodenseitigen Förderer hin verlagert. Von diesem aus erfolgt dann die an sich bekannte Entnahme der Hackfrüchte mittels eines die zweite Seitenwand bildenden Austragförderers als zweites Aggregat des aufwändigen Entladesystems. Die Befüllung dieses Bunkers ist dabei nur im Bereich der einen zusätzlichen Seitenschild aufweisenden Seitenwand möglich, da das Erntegut zwangsgeführt gleitend über einen Zuführspalt in den Aufnahmeraum gelangen muss. Diese von dem nachteiligen Seitenschild begrenzte Gleit-Seitenwand wirkt mit der gegenüberliegenden Ausfördereinrichtung nicht als Einheit zusammen, vielmehr weist der Bunker einerseits ein Einlasssystem zur schonenden Aufnahme des Erntegutes auf, und andererseits ist ein mehrgliedriges Ausfördersystem vorgesehen.

Die Erfindung befasst sich mit dem Problem, eine Erntemaschine für verschiedene Hackfrüchte zu schaffen, deren zum Sammeln des Erntegutes vorgesehener Bunker mit verringertem technischem Aufwand eine optimale Verteilung des Erntegutes im Aufnahmeraum ermöglicht, wobei dessen nachfolgende Entleerung weitgehend ohne Beschädigungen sowie ohne Verluste von Erntegut durchführbar ist.

Die Erfindung löst diese Aufgabe mit einer Erntemaschine für Hackfrüchte mit den Merkmalen des Anspruchs 1. Hinsichtlich weiterer vorteilhafter Ausgestaltungen wird auf die Ansprüche 2 bis 17 verwiesen.

Eine Erntemaschine für Hackfrüchte ist in Form eines selbst fahrenden oder gezogenen Bunkerroders mit einem als Zwischen- oder Überladebunker bezeichneten Aggregat versehen, aus dem die gerodeten Hackfrüchte nach einer Sammelphase mittels einer Fördereinrichtung ausförderbar sind. Das erfindungsgemäße Konzept dieser Bunker-Konstruktion sieht vor, dass diese zumindest im Bereich einer zur seitlichen Übergabebaugruppe abgewandten Längsseite des Aufnahmeraumes mit einer wandartig ausrichtbaren und beweglichen Anlagestruktur versehen wird. Diese kann jeweils in einer Sammelphase, einer Zwischenlagerphase und/oder einer Entleerungsphase mit der Fördereinrichtung zusammenwirken und damit die Nutzungsbedingungen des Bunkers verbessern.

Diese Anlagestruktur kann zusätzlich zu einer üblicherweise den Aufnahmeraum begrenzenden Längsseitenwand des Bunkers vorgesehen sein. Vorteilhaft ist die Konstruktion jedoch so ausgeführt, dass diese wandartige und durch ihre Beweglichkeit multifunktional wirkende Anlagestruktur mit jeweiligen eine Längsseitenwand entbehrlich machenden Abmessungen in die Bunker-Konstruktion bzw. dessen Aufnahmeraum integriert ist.

Mit dieser zum Boden des Aufnahmeraumes hin im wesentlichen vertikal ausrichtbaren Anlagestruktur wird erreicht, dass der Aufnahmeraum des Bunkers zumindest phasenweise beim Füllen, Lagern und/oder Ausfördern von einer aktiven Baugruppe begrenzt wird, die eine "steuernde" Wirkung auf das gesammelte Erntegut ausüben kann. In der Füllphase des Aufnahmeraumes kann die als beweglicher Teilbereich ausgeführte Anlagestruktur neben ihrer weitgehend statischen Anlage-Funktion auch verlagert werden, derart, dass das - an dieser wandartigen Struktur optimal anlegbare und bis in die vorgesehene Füllhöhe stapelbare - Erntegut auch einer gezielten Bewegung innerhalb des Aufnahmeraumes ausgesetzt wird, um beispielsweise den Füllzustand zu verbessern.

Während einer anschließenden Ausförderphase mittels der Fördereinrichtung kann die als beweglicher Teilbereich ausgebildete Anlagestruktur eine gezielte Verlagerung des Erntegutes unterstützen, so dass dieses schonend auf den Rollboden des Bunkers gelangt und mittels der seitlichen Übergabebaugruppe der Fördereinrichtung in ein neben der Maschine befindliches Transportfahrzeug übergeben wird.

Entsprechend der Größenverhältnisse von Bunker und übernehmendem Aufnahmebehälter des Transportfahrzeugs kann es erforderlich werden, dass bei dessen vollständiger Beladung bereits vor einer vollständigen Leerung des Aufnahmeraumes der Übergabevorgang zu unterbrechen ist und dann im Bereich der Fördereinrichtung - bzw. des Rollbodens und der Übergabebaugruppe - eine "Restmenge" von Hackfrüchten o. dgl. Erntegut verbleibt. Dieses für einen späteren Abtransport geeignete Erntegut muss - insbesondere zur Vermeidung von Ernteverlusten bei Fortsetzung der Rodung - in den Aufnahmeraum zurückverlagert werden, um einen ungewollten Austritt von Erntegut auf das Feld zu vermeiden. Dazu kann ein zuletzt wirksamer Entladevorschub der Fördereinrichtung auf eine entgegengesetzte Förderrichtung eingestellt werden, so dass damit die noch auf den Förderbereichen befindliche Restmenge in den Aufnahmeraum zurückgefördert wird. Während dieser Rückförderphase kann nunmehr die "bewegliche" Anlagestruktur besonders effizient eingesetzt werden, derart, dass im Bereich vor diesem wandartigen Vertikalbereich der Anlagestruktur die Restmenge des Erntegutes in einer muldenartigen Sammelzone beschädigungsfrei erfasst und damit für den nächsten Entleerungsvorgang bereitgestellt wird.

Die Anlagestruktur bildet damit eine Funktionseinheit, die mit jeweiligen zumindest bei aktiver Fördereinrichtung deren Förderrichtung unterstützenden Bewegungsteilen versehen ist, so dass die vorbeschriebenen Förderwirkungen optimal erreichbar sind. Die bewegliche Anlagestruktur kann dabei innerhalb des Aufnahmeraumes mit weitgehend beliebiger Führungskontur verlaufen, so dass sowohl in der Ausförderphase als auch in der Rückstellphase das Erntegut durch die beweglichen Teilbereiche der Anlagestruktur optimal beeinflussbar ist. Dabei ist vorgesehen, dass sich die Anlagestruktur bis in den Bereich der Fördereinrichtung erstrecken kann und damit die beweglichen Teilbereiche mit dem Bereich des Rollbodens und der Übergabebaugruppe als eine kompakte steuerbare Förder-Einheit zusammenwirken.

Zur einfachen Realisierung dieses steuerbaren Konzeptes ist in zweckmäßiger Ausführung vorgesehen, dass die Fördereinrichtung mit einem an sich bekannten Bandförderer versehen ist. Dieser kann in einer um die Anlagestruktur "verlängerten" Ausführung umlaufend angetriebenen werden, derart, dass das Fördertrum dieses Bandförderers den beweglichen Teilbereich der Anlagestruktur definiert. Dieser "verlängerte" Bandförderer kann mit geringem Aufwand variabel vorgebbare Teilbereiche des insbesondere vertikalen Bereiches der Anlagestruktur bilden, wobei jeweilige Umlenkelemente den Verlauf vorgeben. Dabei werden mit zumindest einem zentralen und/oder zusätzlichen Bandantrieb auch diese Teilbereiche der Anlagestruktur erfasst, und die jeweils vorgesehenen Bewegungsrichtungen können mittels einer Steuerung optimal vorgegeben werden.

In zweckmäßiger Ausführung ist vorgesehen, dass der Bandförderer im Bereich der Anlagestruktur zwei übereinander an Vertikalstreben abgestützte Förderwellen als Umlenkelemente aufweist, wobei diese Förderwellen auch als antreibbare Elemente vorgesehen sein können. Die Förderwellen sind in ihrem vertikalen Abstand zueinander einstellbar, so dass die gesamte Anlagestruktur jeweils optimale Bedingungen für die umlaufenden Teilbereiche der Fördereinrichtung bzw. des Bandförderers aufweist.

Neben dieser - in die Fördereinrichtung mit Rollboden und Übergabebaugruppe integrierten - Ausführung des Systems ist denkbar, dass die Anlagestruktur auch als eine von der Fördereinrichtung weitgehend unabhängig wirksame Baugruppe ausgebildet werden kann. Diese in Form eines autarken vertikalen Förderbandes, Rollenbandes o. dgl. Förderers definierbare Anlagestruktur ist vorteilhaft im Bereich der für den Bunker definierten Längsseitenwand angeordnet. Diese autark bewegliche Anlagestruktur kann dann wahlweise synchron mit dem Rollboden bzw. der Übergabebaugruppe in einer jeweiligen Bedienphase der Fördereinrichtung zugeschaltet werden.

Ebenso ist vorgesehen, dass die wandartige Anlagestruktur - in Form des Bandförderers oder der unabhängigen Baugruppe - ein System bildet, das in Bezug auf den Aufnahmeraum in variablen Nutzstellungen schwenkbar bzw. klappbar mit der Bunkerkonstruktion verbunden ist. Dabei kann die wandartige Anlagestruktur auch mit verlagerbaren, klappbaren und/oder schwenkbaren Teilbereichen ausgebildet sein, so dass Wandbereiche beispielsweise nach Art eines "Überhangs" den oberen Bereich des Aufnahmeraumes begrenzen.

In zweckmäßiger Ausführung ist vorgesehen, dass die Anlagestruktur in jeweilige mit dem Rollboden gleichebenig verlaufende oder aus dieser Lage geneigte Gebrauchsstellungen verlagerbar ist. Damit kann beispielsweise eine vom Aufnahmeraum nach außen gerichtete Klapp-Bewegung der Anlagestruktur vorgesehen werden. Damit ist auf der der Übergabebaugruppe gegenüberliegenden Längsseite der Maschine ebenfalls ein Entleerungsvorgang denkbar und beispielsweise im Falle einer "notentleerung" oder zur Abgabe von Restmengen des Erntegutes die Anlagestruktur in nach außen geklappter Stellung benutzbar.

In Erweiterung des vorbeschriebenen Konzeptes ist denkbar, die Anlagestruktur im Bunker an variablen Stellen einzubauen und dieses System auch im Bereich einer oder beider Querseiten des Aufnahmeraumes vorzusehen. Damit wird auch in diesen Bereichen durch bewegliche wandartige Teile bzw. Teilbereiche eine Unterstützung des jeweiligen Fördervorgangs möglich, und die jeweilige Sammel- bzw. Übergabephase derartiger Überladebunker kann weiter optimiert werden.

Weitere Einzelheiten und vorteilhafte Ausgestaltungen der Erfindung ergeben sich aus der nachfolgenden Beschreibung, die ein Ausführungsbeispiel der erfindungsgemäßen Erntemaschine mit verbessertem Bunker zeigt. In der Zeichnung zeigen:
- Fig. 1: eine perspektivische Ausschnittsdarstellung einer Erntemaschine im Bereich eines Überladebunkers in einer Übergabephase,
- Fig. 2: eine Querschnittsdarstellung gemäß einer Linie II-II in Fig. 1,
- Fig. 3: eine geschnittene Perspektivdarstellung ähnlich Fig. 2 in einer Rückförderphase im Bereich des Bunkers, und
- Fig. 4: eine geschnittene Perspektivdarstellung ähnlich Fig. 3 mit Erntegut im Bereich des Aufnahmeraumes.

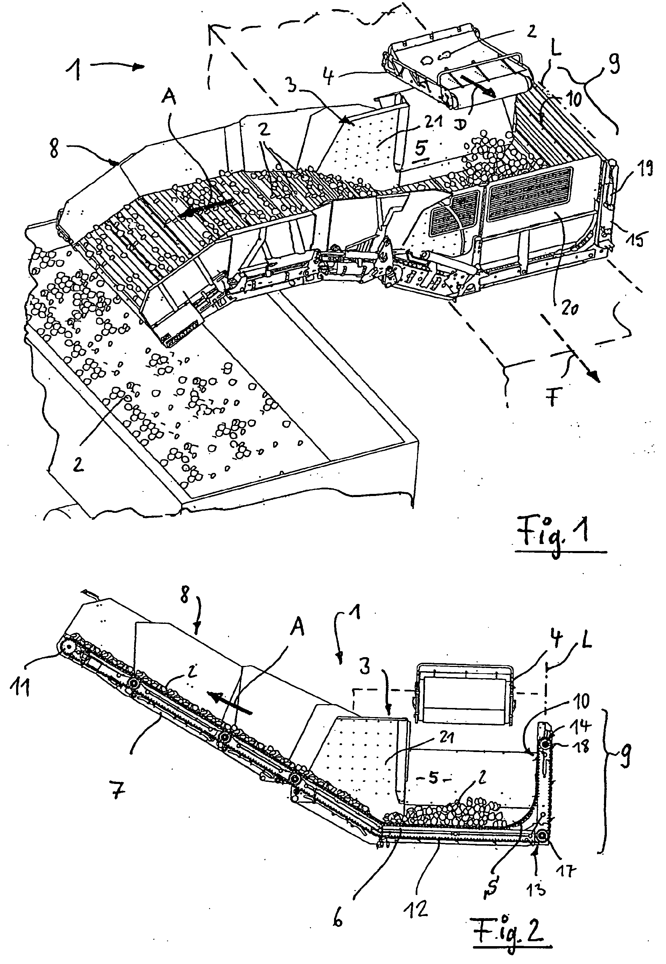

In Fig. 1 ist in einer schematischen Perspektivdarstellung eine insgesamt mit 1 bezeichnete Erntemaschine für Kartoffeln, Rüben o. dgl. Hackfrüchte 2 dargestellt. Diese Erntemaschine 1 ist kann insbesondere in Form eines selbst fahrenden oder gezogenen Bunkerroders ausgeführt sein, der einen gerodete Hackfrüchte 2 nach einer Reinigungsphase (nicht dargestellt) aufnehmenden Zwischen- oder Überladebunker 3 aufweist. Die Hackfrüchte 2 werden mittels einer Fördereinheit 4 in einen Aufnahmeraum 5 eingefördert und in diesem zumindest phasenweise während eines Rodezyklus der Erntemaschine 1 gelagert. Aus diesem Aufnahmeraum 5 können die Hackfrüchte 2 mittels einer zumindest bereichsweise im Bunker 3 einen Rollboden 6 bildenden, eine seitliche Übergabebaugruppe 7 aufweisenden und im wesentlichen quer zur Fahrtrichtung F der Maschine 1 ausrichtbaren Fördereinrichtung 8 ausgefördert werden (Pfeil A, Fig. 1).

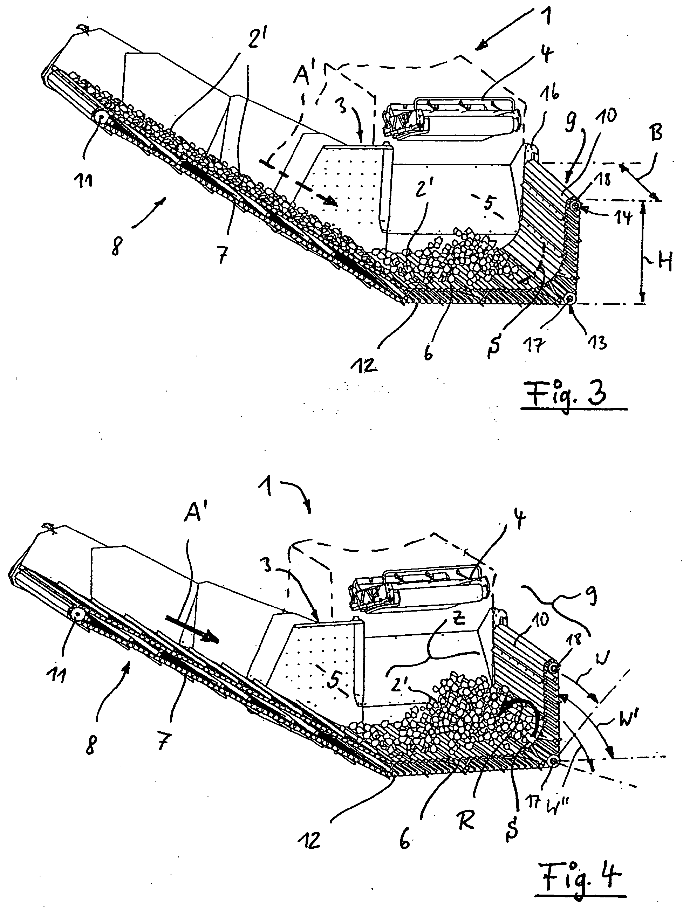

Das erfindungsgemäße Konzept der Erntemaschine 1 sieht vor, dass diese im Bereich ihres mit einer Fördereinrichtung 8 zusammenwirkenden Bunkers 3 - zumindest im Bereich einer zur seitlichen Übergabebaugruppe 7 abgewandten Längsseite L des Aufnahmeraumes 5 - mit einer wandartigen beweglichen Anlagestruktur 9 versehen ist. Damit wird erreicht, dass der Aufnahmeraum 5 des Bunkers 3 zumindest phasenweise beim Befüllen (Pfeil D, Fig. 1) und/oder Ausfördern (Pfeil A) von der im wesentlichen vertikal verlaufenden Anlagestruktur 9 begrenzt werden kann. Diese Anlagestruktur 9 kann zusätzlich zu einer im Bereich der Längsseite L platzierbaren Seitenwandung (nicht dargestellt) vorgesehen sein; vorteilhaft ist jedoch vorgesehen, dass die Anlagestruktur 9 jeweilige die zusätzliche Anordnung einer Seitenwand entbehrlich machende Abmessungen H, B (Fig. 3) aufweist.

Das System mit der beweglichen Anlagestruktur 9 ist so ausgeführt, dass in diese Konstruktion allgemein mit 10 bezeichnete Bewegungsteile integriert sind und mit diesen Teilen 10 zumindest bei aktivierter Fördereinrichtung 8 deren in jeweilige Förderrichtungen A bzw. A' verlaufende Gutstrombewegungen unterstützt werden können.

Aus der Zusammenschau von Fig. 1 bis Fig. 4 wird deutlich, dass die Anlagestruktur 9 im Randbereich des Aufnahmeraumes 5 nach Art einer Führungskontur für die Hackfrüchte 2' wirksam wird. Insbesondere sind in einer nach einer Ausförderphase (Pfeil A, Fig. 1) erfolgenden Rückstellphase (Pfeil A', Fig. 4) umgekehrte Förderverhältnisse erforderlich, um im Bereich der Fördereinrichtung 8 jeweilige auf dieser befindliche Restmengen von Hackfrüchten 2' (Fig. 3) zu einer Sammelzone Z des Aufnahmeraumes 5 hin zu verlagern. Aus der Darstellung gemäß Fig. 4 wird deutlich, dass die Sammelzone Z unmittelbar vor der vertikalen Anlagestruktur 9 gebildet ist und hier die Restmenge der Hackfrüchte 2' optimal gelagert wird.

Bei der Rückverlagerung der Hackfrüchte 2' (Fig. 3 und Fig. 4) werden diese in einer Bogenkontur S von der Anlagekontur 9 optimal geführt, wobei eine mit einem Pfeil R angedeutete Rollbewegung im Bereich S so auftritt, dass sowohl Beschädigungen des Erntegutes 2' als auch ein Einklemmen von Erntegut durch eine im wesentlichen ecken- und kantenfreie Gestaltung dieser Sammelzone Z vermieden sind.

Eine vorteilhafte konstruktive Ausbildung der Anlagestruktur 9 ist erfindungsgemäß dadurch erreicht, dass die Anlagestruktur 9 unmittelbar als ein beweglicher Teilbereich der Fördereinrichtung 8 ausgebildet wird und diese dann im wesentlichen einstückig unterhalb der Hackfrüchte 2, 2' verläuft. Dabei ist vorgesehen, dass die bewegliche Anlagestruktur 9 unmittelbar mit dem Rollboden 6 und der Übergabebaugruppe 7 verbunden wird und damit eine kompakte Transport-Einheit erreicht ist.

Aus den Darstellungen gemäß Fig. 1 bis Fig. 4 wird diese Ausführung des Systems deutlich, wobei die Fördereinrichtung 8 mit einem umlaufend angetriebenen und den beweglichen Teilbereich der Anlagestruktur 9 durchlaufenden Bandförderer 12 versehen ist. In einfachster Ausführung ist der Bandförderer 12 so ausgebildet, dass mittels jeweiliger übereinander angeordneter Umlenkelemente 13, 14 der bewegliche Teilbereich der vertikalen Anlagestruktur 9 definiert wird. Diese Umlenkelemente 13, 14 sind zweckmäßig von zwei übereinander an Vertikalstreben 15, 16 abgestützten Förderwellen 17, 18 gebildet.

Denkbar ist dabei, dass zusätzlich zum Antrieb 11 im Bereich der Fördereinrichtung 8 auch eine oder beide der Förderwellen 17, 18 als angetriebene Bauteile vorgesehen sind. Die Konstruktion sieht vor, dass die Förderwellen 17, 18 mittels eines im Bereich der Vertikalstreben 15, 16 vorgesehenen Stellelementes 19 einstellbar gehalten sind. Damit können die Förderwellen 17, 18 in ihrem vertikalen Abstand (Höhe H) zueinander eingestellt werden.

Eine weitere Ausführung der für die Erntemaschine 1 vorgesehenen Anlagestruktur 9 sieht vor, dass diese als eine unabhängig von der Fördereinrichtung 8 wirksame Baugruppe ausgebildet werden kann (nicht dargestellt). Dabei ist denkbar, dass die Anlagestruktur 9 mit einem separaten Antrieb versehen wird und auch (im Unterschied zur dargestellten Ausführung) unabhängige Einstellungen im Bereich der autarken Anlagestruktur 9 vorgenommen werden können.

In Ergänzung der dargestellten Ausführung gemäß Fig. 1 bis Fig. 4 bzw. der "autarken" Anlagestruktur ist auch vorgesehen, dass das jeweilige wandartige bewegliche System in variable Nutzstellungen schwenkbar bzw. klappbar ausgeführt sein kann. In Fig. 4 ist durch jeweilige Winkelstellungen W, W' und W" die denkbare Schwenk-Verlagerung der Anlagestruktur 9 angedeutet. Dabei kann die Anlagestruktur 9 in eine mit dem Rollboden 6 gleichebenige Gebrauchsstellung W' geschwenkt werden, so dass bereits in dieser Lage ein Ausfördern der Restmenge von Hackfrüchten 2' möglich ist (bei in Richtung A' laufendem Bandförderer 12). Diese denkbare Ausförderung - nach der zur Übergabebaugruppe 7 abgewandten Seite der Maschine 1 hin - ist auch in den jeweiligen Lagen W bzw. W" der Anlagestruktur 9 denkbar.

Ebenso kann die vorbeschriebene Klapp-Konstruktion so ausgebildet werden, dass die wandartige Anlagestruktur 9 nur klappbare Teilbereiche entlang ihrer Kontur aufweist, so dass beispielsweise der obere Randbereich der Anlagestruktur 9 zum Aufnahmeraum 5 hin einschwenkbar ist und damit in diesem Bereich eine den Austritt der Hackfrüchte 2' verhindernde Schutzstellung nach Art eines "Überhangs" definiert ist.

In konstruktiver Erweiterung der vorbeschriebenen Ausführungsformen ist auch eine Erntemaschine 1 mit einem Bunker 3 denkbar, bei dem die bewegliche Anlagestruktur 9 im Bereich einer oder beider Querseiten 20, 21 des Aufnahmeraumes 5 angeordnet wird (nicht dargestellt) und damit das Be- und Entladesystem des Bunkers 3 an weitere Anwendungsfälle , z. B. wechselnde Hackfrüchte mit veränderten Fördereigenschaften, angepasst werden kann.

## Patentansprüche

1. Erntemaschine für Kartoffeln, Rüben o. dgl. Hackfrüchte (2), in Form eines selbst fahrenden oder gezogenen Bunkerroders (1), der einen gerodete Hackfrüchte (2) nach einer Reinigungsphase aufnehmenden Zwischen- oder Überladebunker (3) aufweist, wobei aus dessen Aufnahmeraum (5) die Hackfrüchte (2) mittels einer zumindest bereichsweise im Bunker (3) einen Rollboden (6) bildenden, eine seitliche Übergabebaugruppe (7) aufweisenden und im wesentlichen quer zur Fahrtrichtung (F) der Maschine (1) ausrichtbaren Fördereinrichtung (8) ausförderbar sind, **dadurch gekennzeichnet, dass** die Fördereinrichtung (8) zumindest im Bereich einer zur seitlichen Übergabebaugruppe (7) abgewandten Längsseite (L) des Aufnahmeraumes (5) mit einer wandartigen beweglichen Anlagestruktur (9) zusammenwirkt, wobei die Anlagestruktur (9) mit jeweiligen zumindest bei aktiver Fördereinrichtung (8) deren jeweilige Förderrichtung (A, A') unterstützenden Bewegungsteilen (10) versehen ist.

2. Erntemaschine nach Anspruch 1, **dadurch gekennzeichnet, dass** der Aufnahmeraum (5) des Bunkers (3) zumindest phasenweise beim Befüllen (D) und/oder Ausfördern (A) von der im wesentlichen vertikal verlaufenden Anlagestruktur (9) begrenzbar ist.

3. Erntemaschine nach Anspruch 1 oder 2, **dadurch gekennzeichnet, dass** die Anlagestruktur (9) jeweilige die zusätzliche Anordnung einer im wesentlichen vertikalen Längsseitenwand (L) entbehrlich machende Abmessungen (H, B) aufweist.

4. Erntemaschine nach einem der Ansprüche 1 bis 3, **dadurch gekennzeichnet, dass** die Anlagestruktur (9) im Aufnahmeraum (5) eine Führungskontur für die Hackfrüchte (2, 2') bildet, derart, dass bei einer nach einer Ausförderphase (Pfeil A) erfolgenden Rückstellphase (Pfeil A') im Bereich der Fördereinrichtung (8) jeweilige auf dieser befindliche Restmengen (2') von Hackfrüchten in eine Sammelzone (Z) des Aufnahmeraumes (5) verlagerbar sind.

5. Erntemaschine nach Anspruch 4, **dadurch gekennzeichnet, dass** die Sammelzone (Z) vor der vertikalen Anlagestruktur (9) einen Anlagebogen (S) bildet.

6. Erntemaschine nach einem der Ansprüche 1 bis 5, **dadurch gekennzeichnet, dass** die Anlagestruktur (9) unmittelbar als ein beweglicher Teilbereich der Fördereinrichtung (8) ausgebildet ist.

7. Erntemaschine nach Anspruch 6, **dadurch gekennzeichnet, dass** die bewegliche Anlagestruktur (9) im Bereich der Fördereinrichtung (8) mit dem Rollboden (6) und der Übergabebaugruppe (7) verbunden ist.

8. Erntemaschine nach einem der Ansprüche 1 bis 7, **dadurch gekennzeichnet, dass** die Fördereinrichtung (8) mit einem umlaufend angetriebenen und auch den beweglichen Teilbereich der Anlagestruktur (9) durchlaufenden Bandförderer (12) versehen ist.

9. Erntemaschine nach Anspruch 8, **dadurch gekennzeichnet, dass** der Bandförderer (12) mittels jeweiliger Umlenkelemente (13, 14) den Teilbereich der vertikalen Anlagestruktur (9) bildet.

10. Erntemaschine nach Anspruch 8 oder 9, **dadurch gekennzeichnet, dass** der Bandförderer (12) im Bereich der Anlagestruktur (9) zwei übereinander an Vertikalstreben (15, 16) abgestützte Förderwellen (17, 18) als Umlenkelemente (13, 14) aufweist.

11. Erntemaschine nach einem der Ansprüche 8 bis 10, **dadurch gekennzeichnet, dass** die Förderwellen (17, 18) im Bereich der Anlagestruktur (9) antreibbar sind.

12. Erntemaschine nach einem der Ansprüche 8 bis 11, **dadurch gekennzeichnet, dass** die Förderwellen (17, 18) in ihrem Abstand zueinander einstellbar sind.

13. Erntemaschine nach einem der Ansprüche 1 bis 12, **dadurch gekennzeichnet, dass** die Anlagestruktur (9) als eine unabhängig von der Fördereinrichtung (8) wirksame Baugruppe ausgebildet ist.

14. Erntemaschine nach einem der Ansprüche 1 bis 13, **dadurch gekennzeichnet, dass** die wandartige Anlagestruktur (9) in variable Nutzstellungen (W, W, W") schwenkbar bzw. klappbar ist.

15. Erntemaschine nach Anspruch 14, **dadurch gekennzeichnet, dass** die wandartige Anlagestruktur (9) verlagerbare Teilbereiche aufweist.

16. Erntemaschine nach Anspruch 14 oder 15, **dadurch gekennzeichnet, dass** die Anlagestruktur (9) in eine mit dem Rollboden (6) gleichebenig (W) oder zu diesem hin geneigte Gebrauchsstellung (W, W") verlagerbar ist.

17. Erntemaschine nach einem der Ansprüche 1 bis 16, **dadurch gekennzeichnet, dass** im Bereich einer oder beider Querseiten (20, 21) des Aufnahmeraumes (5) jeweils zumindest eine bewegliche Anlagestruktur (9) vorgesehen ist.

## Claims

1. Harvesting machine for potatoes, beets or similar root crops (2) in the form of a selfpropelled or trailed bunker harvester (1), comprising an intermediate or overload bunker (3) which holds uprooted root crops (2) after a cleaning phase, the root crops (2) being dischargeable from the receiving chamber (5) of said bunker by means of a conveying device (8) which forms an endless floor (6) at least in regions of the bunker (3), comprises a lateral transfer assembly (7) and can be oriented substantially transversely to the direction of travel (F) of the machine (1), **characterised in that** the conveying device (8) interacts with a wall-like movable abutment structure (9) at least in the region of a longitudinal side (L),of the receiving chamber (5) which faces away from the lateral transfer assembly (7), the abutment structure (9) being provided with particular moving parts (10) which, at least when the conveying device (8) is active, provide the particular conveying direction (A, A') of said conveying device.

2. Harvesting machine according to claim 1, **characterised in that** the receiving chamber (5) of the bunker (3) can be delimited at least intermittently during filling (D) and/or discharging (A) by the substantially vertically extending abutment structure (9).

3. Harvesting machine according to either claim 1 or claim 2, **characterised in that** the abutment structure (9) has particular measurements (H, B) which render the additional arrangement of a substantially vertical longitudinal side wall (L) unnecessary.

4. Harvesting machine according to any of claims 1 to 3, **characterised in that** the abutment structure (9) in the receiving chamber (5) forms a guide contour for the root crops (2, 2') such that, during a resetting phase (arrow A') which is carried out after a discharge phase (arrow A), in the region of the conveying device (8) particular residual amounts (2') of root crops located on said device can be transferred to a collection zone (Z) in the receiving chamber (5).

5. Harvesting machine according to claim 4, **characterised in that** the collection zone (Z) forms an abutment curve (S) in front of the vertical abutment structure (9).

6. Harvesting machine according to any of claims 1 to 5, **characterised in that** the abutment structure (9) is directly formed as a movable portion of the conveying device (8).

7. Harvesting machine according to claim 6, **characterised in that** the movable abutment structure (9) is connected to the endless floor (6) and the transfer assembly (7) in the region of the conveying device (8).

8. Harvesting machine according to any of claims 1 to 7, **characterised in that** the conveying device (8) is provided with a belt conveyor (12) which is driven in a circulatory manner and also passes through the movable portion of the abutment structure (9).

9. Harvesting machine according to claim 8, **characterised in that** the belt conveyor (12) forms the portion of the vertical abutment structure (9) by means of respective deflectors (13, 14).

10. Harvesting machine according to either claim 8 or claim 9, **characterised in that**, in the region of the abutment structure (9), the belt conveyor (12) comprises two conveyor shafts (17, 18) which are supported one above the other on vertical braces (15, 16) and are formed as deflectors (13, 14).

11. Harvesting machine according to any of claims 8 to 10, **characterised in that** the conveyor shafts (17, 18) in the region of the abutment structure (9) are driveable.

12. Harvesting machine according to any of claims 8 to 11, **characterised in that** the distance between the conveyor shafts (17, 18) is adjustable.

13. Harvesting machine according to any of claims 1 to 12, **characterised in that** the abutment structure (9) is formed as an assembly which operates independently of the conveying device (8).

14. Harvesting machine according to any of claims 1 to 13, **characterised in that** the wall-like abutment structure (9) can be pivoted or folded into variable use positions (W, W', W").

15. Harvesting machine according to claim 14, **characterised in that** the wall-like abutment structure (9) comprises movable portions.

16. Harvesting machine according to either claim 14 or claim 15, **characterised in that** the abutment structure (9) can be moved into a use position (W, W") which is in the same plane (W') as the endless floor (6) or is inclined theretowards.

17. Harvesting machine according to any of claims 1 to 16, **characterised in that** at least one movable abutment structure (9) is provided in each case in the region of one or both of the transverse sides (20, 21) of the receiving chamber (5).

## Revendications

1. Moissonneuse pour pommes de terre, betteraves ou plantes racines (2) analogues, sous la forme d'une cueilleuse à trémie (1) roulant de manière autonome ou tractée, qui présente un trémie (3) intermédiaire ou de surcharge recevant des plantes racines (2) enlevées après une phase de nettoyage, les plantes racines (2) pouvant être extraites de la chambre de réception (5) au moyen d'un dispositif de transport (8) formant un plancher roulant (6) dans le trémie (3) au moins par endroits, présentant un ensemble de transfert latéral (7) et pouvant être orienté sensiblement transversalement à la direction de déplacement (F) de la machine (1),
**caractérisée en ce que** le dispositif de transport (8) coopère, au moins au niveau d'un côté longitudinal (L) de la chambre de réception (5) qui est opposé à l'ensemble de transfert latéral (7), avec une structure d'appui (9) mobile de type paroi, la structure d'appui (9) étant munie de pièces de mouvement (10) respectives soutenant la direction de transport (A, A') respective au moins lorsque le dispositif de transport (8) est actif.

2. Moissonneuse selon la revendication 1, **caractérisée en ce que** la chambre de réception (5) de la trémie (3) peut être délimitée au moins par phases lors du remplissage (D) et/ou l'extraction (A) de la structure d'appui (9) s'étendant sensiblement verticalement.

3. Moissonneuse selon la revendication 1 ou 2, **caractérisée en ce que** la structure d'appui (9) présente des dimensions (H, B) permettant accessoirement respectivement l'agencement supplémentaire d'une paroi latérale longitudinale (L) sensiblement verticale.

4. Moissonneuse selon une des revendications 1 à 3, **caractérisée en ce que** la structure d'appui (9) forme dans la chambre de réception (5) un contour de guidage pour les plantes racines (2, 2') de telle sorte que, lors d'une phase de réajustement (flèche A') effectuée après une phase d'extraction (flèche A), au niveau du dispositif de transport (8), des quantités résiduelles (2') de plantes racines se trouvant respectivement sur celui-ci peuvent être déplacées dans une zone de récupération (Z) de la chambre de réception (5).

5. Moissonneuse selon la revendication 4, **caractérisée en ce que** la zone de récupération (Z) forme un arc d'appui (S) devant la structure d'appui verticale (9).

6. Moissonneuse selon une des revendications 1 à 5, **caractérisée en ce que** la structure d'appui (9) est directement réalisée sous la forme d'une zone partielle mobile du dispositif de transport (8).

7. Moissonneuse selon la revendication 6, **caractérisée en ce que** la structure d'appui mobile (9) est reliée, au niveau du dispositif de transport (8), au plancher roulant (6) et à l'ensemble de transfert (7).

8. Moissonneuse selon une des revendications 1 à 7, **caractérisée en ce que** le dispositif de transport (8) est muni d'une bande transporteuse (12) entraînée de manière périphérique et traversant de manière continue également la zone partielle mobile de la structure d'appui (9).

9. Moissonneuse selon la revendication 8, **caractérisée en ce que** la bande transporteuse (12) forme, au moyen d'éléments de déviation respectifs (13, 14), la zone partielle de la structure d'appui verticale (9).

10. Moissonneuse selon la revendication 8 ou 9, **caractérisée en ce que** la bande transporteuse (12) présente, au niveau de la structure d'appui (9), deux arbres de transport (17, 18) appuyés l'un au-dessus de l'autre sur des barres verticales (15, 16) et servant d'éléments de déviation (13, 14).

11. Moissonneuse selon une des revendications 8 à 10, **caractérisée en ce que** les arbres de transport (1 7, 18) peuvent être entraînés au niveau de la structure d'appui (9).

12. Moissonneuse selon une des revendications 8 à 11, **caractérisée en ce que** les arbres de transport (17, 18) peuvent être réglés en distance l'un par rapport à l'autre.

13. Moissonneuse selon une des revendications 1 à 12, **caractérisée en ce que** la structure d'appui (9) est réalisée sous la forme d'un ensemble agissant indépendamment du dispositif de transport (8).

14. Moissonneuse une des revendications 1 à 13, **caractérisée en ce que** la structure d'appui (9) de type paroi est pivotante ou rabattable dans des positions d'utilisation variables (W, W', W").

15. Moissonneuse selon la revendication 14, **caractérisée en ce que** la structure d'appui (9) de type paroi présente des zones partielles déplaçables.

16. Moissonneuse selon la revendication 14 ou 15, **caractérisée en ce que** la structure d'appui (9) est déplaçable dans une position d'utilisation (W, W") dans le même plan (W') que le plancher roulant (6) ou inclinée par rapport à celui-ci.

17. Moissonneuse selon une des revendications 1 à 16, **caractérisée en ce que**, au niveau d'un ou des deux côtés transversaux (20, 21) de la chambre de réception (5) au moins une structure d'appui (9) mobile est respectivement prévue.
